# EUROPÄISCHE PATENTSCHRIFT

(11) **EP 0 615 498 B1**
(45) Veröffentlichungstag und Bekanntmachung des Hinweises auf die Patenterteilung: **07.02.1996**
(21) Anmeldenummer: 93919015.3
(22) Anmeldetag: 18.09.1993
(51) Int. Cl.: B60T 8/36, F16K 31/06

(54) **MAGNETVENTIL**
MAGNETIC VALVE
SOUPAPE MAGNETIQUE

(30) Priorität: 15.10.1992 DE 4234749
(43) Veröffentlichungstag der Anmeldung: 21.09.1994
(73) Patentinhaber: ROBERT BOSCH GMBH, D-70442 Stuttgart (DE)
(72) Erfinder: SCHMID, Otto, D-87538 Fischen (DE)
(74) Vertreter: Knetsch, Manfred
(86) Internationale Anmeldenummer: DE9300886
(87) Internationale Veröffentlichungsnummer: WO9408831

(56) Entgegenhaltungen:
- EP-A- 0 232 783
- EP-A- 0 492 109
- DE-A- 3 609 340
- DE-A- 4 129 638
- FR-A- 1 096 559
- FR-A- 2 507 280
- US-A- 3 818 927

## Beschreibung

### Stand der Technik

Die Erfindung geht aus von einem Magnetventil mit Druckbegrenzung in einer Kraftfahrzeug-Bremsanlage mit Schlupfregelung der im Oberbegriff des Anspruchs 1 definierten Gattung.

Bei einem durch das Dokument EP-A-492 109 bekannten Magnetventil dieser Art trägt der Ventilstößel an seinem vorderen Ende ein als Kugel ausgebildetes Ventilglied und ist im Ventilgehäuse geführt. Die in Öffnungsrichtung des Magnetventils wirkende Rückstellfeder stützt sich als Schraubendruckfeder einerseits an einer einen Ventilsitz aufweisenden Hülse und andererseits auf der vom Ventilglied abgekehrten Seite am Ventilstößel ab. Die Druckbegrenzungsfeder ist in einer zum Ventilstößel koaxialen Bohrung im Anker des Elektromagneten angeordnet und stützt sich als Schraubendruckfeder an einem im Anker beweglichen Federteller ab. Der Federteller ist zum einen gegen die vom Ventilalied abgekehrte Stirnseite des Ventilstößels und zum anderen gegen einen am Anker vorgesehenen Anschlag drückbar. Wird der Elektromagnet erregt, so wird der Anker angezogen, wodurch die Druckbegrenzungsfeder auf den relativ zum Anker beweglichen Ventilstößel wirkt und diesen gegen die Kraft der Rückstellfeder in Richtung Ventilsitz verschiebt und das Ventilglied auf den Ventilsitz aufsetzt. Die das Ventilglied auf den Ventilsitz aufpressende Kraft, die den Öffnungsdruck des Magnetventils in dessen Schließstellung bestimmt, ist von der Vorspannung bzw. Auslegung der Druckbegrenzungsfeder und der Rückstellfeder abhängig.

### Vorteile der Erfindung

Das erfindungsgemäße Magnetventil mit kennzeichnenden Merkmalen des Anspruchs 1 hat den Vorteil, daß durch die erfindungsgemäße Verlagerung der Druckbegrenzungsfeder aus dem Anker des Elektromagneten in den Ventilstößel und den damit verbundenen Wegfall der koaxialen Bohrung im Anker zur Aufnahme der Druckbegrenzungsfeder eine größere Ankerpolfläche zur Verfügung steht und damit bei gleich ausgelegtem Elektromagneten eine größere Magnetkraft verfügbar ist. Die Anschlagfläche des Ankers am Ventilgehäuse kann in Bezug auf den Radius einer am Ventilgehäuse gehaltenen, den Anker aufnehmenden Kapsel optimal gestaltet werden, um Kapselrisse bei Dauerbeanspruchung zu vermeiden.

Das erfindungsgemäße Magnetventil hat einen einfachen konstruktiven Aufbau und kann wesentlich einfacher und genauer eingestellt und justiert werden. Es kann aufgrund seiner Konstruktion von Gestaltung in Vorwärtsmontage montiert werden, wobei Montage und Einstellung sequentiell ablaufen. Dieses spart Montagezeit und hilft Montage- und Betriebsmittel einsparen.

Durch die in den weiteren Ansprüchen aufgeführten Maßnahmen sind vorteilhafte Weiterbildungen und Verbesserungen des im Anspruch 1 angegebenen Magnetventils möglich.

In einer bevorzugten Ausführungsform der Erfindung ist der Ventilsitz an einem in einem hülsenförmigen Ventilgehäuse eingepreßten Ventilkörper ausgebildet. Das vom Elektromagneten antreibbare Stößelelement des zweiteilig ausgebildeten Ventilstößels ist in dem Ventilgehäuse axial geführt und zumindest teilweise hohlzylindrisch ausgebildet, wobei das andere, das Ventilglied tragende Stößelelement in dem hohlzylindrischen Stößelelement axial verschieblich aufgenommen ist. Die Rückstellfeder stützt sich zwischen dem Ventilkörper und dem hohlzylindrischen Stößelelement ab und legt letzteres gegen einen Anker des Elektromagneten an, während die zwischen den Stößelelementen angeordnete Druckbegrenzungsfeder das das Ventilglied tragende Stößelelement gegen einen am hohlzylindrischen Stößelelement ausgebildeten Anschlag anlegt. Durch diese konstruktiven Maßnahmen ist für die Einstellung des Öffnungsdruckes nur noch die Druckbegrenzungsfeder maßgebend und nicht auch noch zusätzlich, wie bei dem bekannten Magnetventil, die Rückstellfeder. Die Federeinstellung kann damit genauer erfolgen und ist besser reproduzierbar. In Verbindung mit den besser definierten Anschlagflächen des Ankers am Ventilgehäuse werden bei der mittels einer Meßvorrichtung vorgenommenen Federeinstellung bisher auftretende Streuungen beim Nullsetzen des Stößelhubs vermieden und der Einfluß des tatsäch chen Restluftspaltes ausgeglichen.

### Zeichnung

Die Erfindung ist anhand von in der Zeichnung dargestellten Ausführungsbeispielen in der nachfolgenden Beschreibung näher erläutert. Es zeigen:

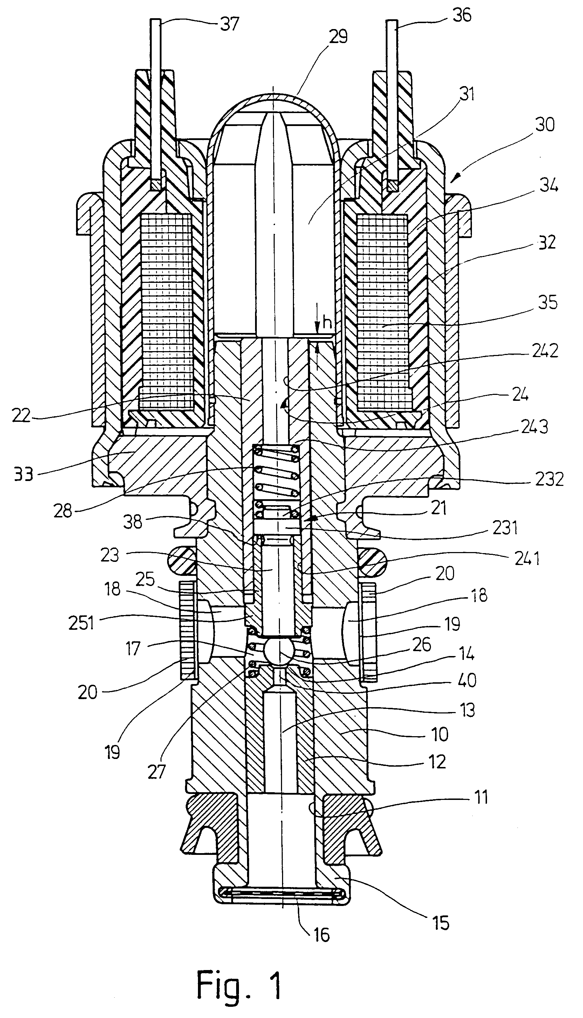

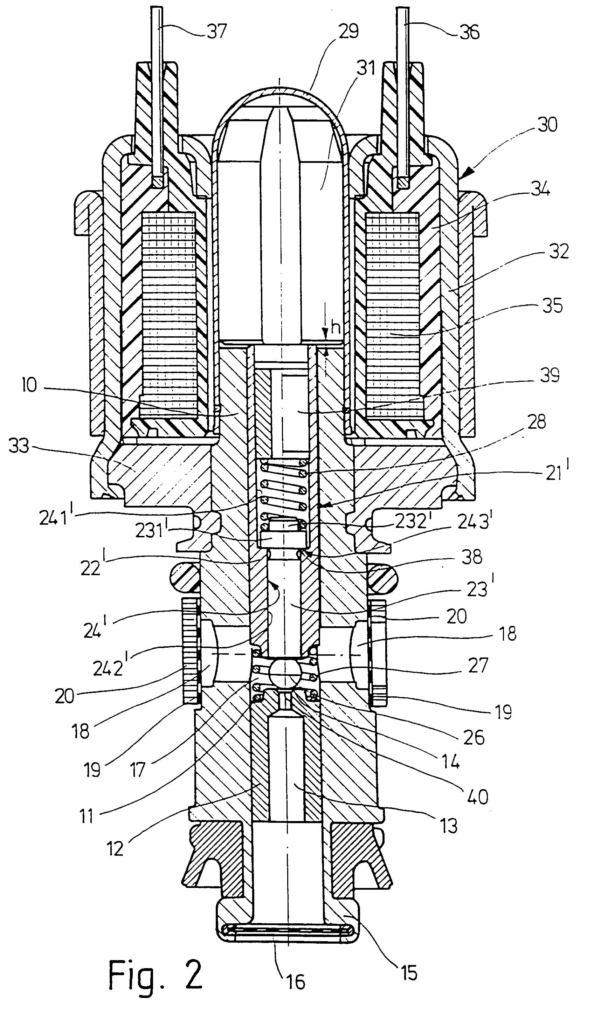

- Fig. 1 und 2: jeweils einen Längsschnitt eines Magnetventils mit Druckbegrenzung für Kraftfahrzeug-Bremsanlagen gemäß einem ersten und zweiten Ausführungsbeispiel.

### Beschreibung der Ausführungsbeispiele

Das in Fig. 1 im Längsschnitt dargestellte Magnetventil mit Druckbegrenzung findet Verwendung in Kraftfahrzeug-Bremsanlagen mit Schlupfregelung, wie Antiblockierschutz und/oder Antriebsschlupfregelung. Es besitzt ein Ventilgehäuse 10 mit einer Längsbohrung 11, in welcher ein Ventilkörper 12 eingepreßt ist. Der Ventilkörper 12 ist mit einem Zuströmkanal 13 versehen, der an dem einen stirnseitigen Ende des Ventilkörpers 12 von einem am Ventilkörper 12 ausgebildeten Ventilsitz 14 umschlossen ist. Der Zuströmkanal 13 steht an dem anderen stirnseitigen Ende des Ventilkörpers 12 mit einem Anschlußstutzen 15 in Verbindung, der von einem Filter 16 abgedeckt ist. Der Ventilkörper 12 grenzt an eine Ventilkammer 17, von der radial verlaufende Abströmkanäle 18 abgehen, die jeweils zu einem schlauchartig geformten Filter 19 münden, das von einer Filterfassung 20 relativ zum Ventilgehäuse 10 fixiert ist.

In der Längsbohrung 11 ist ein zweiteiliger Ventilstößel 21 axial verschieblich geführt, der in zwei koaxiale, relativ zueinander verschiebbare Stößelelemente 22,23 unterteilt ist. Das Stößelelement 22 weist eine längsdurchgehende Stufenbohrung 24 mit einem durchmessergrößeren Bohrungsabschnitt 241 und einem durchmesserkleineren Bohrungsabschnitt 242 auf, wobei am Übergang der Bohrungsabschnitte 241 und 242 eine Ringschulter 243 ausgebildet ist. Das hohlzylindrische Stößelelement 22 mit der Stufenbohrung 24 ist in der Längsbohrung 11 des Ventilgehäuses 10 axial verschieblich geführt, während das stiftförmig ausgebildete Stößelelement 23 in einer Stößelführungsbuchse 25 axial verschieblich geführt ist, die in den durchmessergrößeren Bohrungsabschnitt 241 im Stößelelement 23 eingepreßt ist. Die Stößelführunosbuchse 25 ist dabei von der dem Ventilkörper 12 zugekehrten Stirnseite des Stößelelements 22 her eingesetzt und steht über dessen Stirnseite vor. Im Vorstehbereich ist die Stößelführungsbuchse 25 mit einem einstückigen, radial über den Buchsendurchmesser vorstehenden Ringbund 251 versehen, der zur zusätzlichen Führung in dem durchmessergrößeren Bohrungsabschnitt 241 ausgebildet sein kann.

Das im durchmessergrößeren Bohrungsabschnitt 241 im Stößelelement 22 axial verschieblich geführte stiftartige Stößelelement 23 trägt auf seiner dem Ventilkörper 12 zugekehrten Stirnseite ein als Kugel ausgebildetes Ventilglied 26, das mit dem Ventilsitz 14 am Ventilkörper 12 zum Freigeben und Schließen der an der Mündung des Zuströmkanals 13 ausgebildeten Ventilöffnung 40 zusammenwirkt. Zwischen dem Ventilkörper 12 und der in das Stößelelement 22 eingepreßten Stößelführungsbuchse 25 stützt sich eine als Schraubendruckfeder ausgebildete Rückstellfeder 27 ab, die in Ventilöffnungsrichtung wirkt und das Ventilglied 26 vom Ventilsitz 14 abgehoben hält, so daß eine Verbindung vom Zuströmkanal 13 zu den Abströmkanälen 18 besteht. Wie ohne weiteres ersichtlich, ist das von dem Ventilkörper 12 mit Ventilsitz 14 und Ventilglied 26 sowie Rückstellfeder 27 gebildete Ventil ein in der Grund- oder Ruhestellung offenes Sitzventil, das über den Ventilstößel 21 elektromagnetisch betätigt wird und durch weitere, nachfolgend beschriebene konstruktive Maßnahmen eine Druckbegrenzungsfunktion hat.

Das in der Stößelführungsbuchse 25 axial verschieblich geführte, mit dem Ventilglied 26 nach vorn über die Stößelführungsbuchse 25 vorstehende Stößelelement 23 steht auch über die andere Stirnseite der Stößelführungsbuchse 25 vor und trägt hier einen radial über die Stirnseite der Stößelführungsbuchse 25 hinwegragenden Ringbund 231. An dem Ringbund 231 und an der Ringschulter 243 in der Stufenbohrung 24 stützt sich eine als Schraubendruckfeder ausgebildete Druckbegrenzungsfeder 28 ab, die auf einem über den Ringbund 231 axial vorstehenden Abschnitt 232 des Stößelelements 23 zentriert ist.

Auf das vom Sitzventil abgekehrte Ende des Ventilgehäuses 10 ist eine Kapsel 29 aufgesetzt, in welcher ein Anker 31 eines Elektromagneten 30 mit geringem Hub axial verschieblich geführt ist. Der Elektromagnet 30 selbst umgibt den Anker 31 und das diesem zugekehrte Ende des Ventilgehäuses 10 konzentrisch mit einem topfförmigen Magnetgehäuse 32, dessen Stirnseite von einer in einer Ringnut des Ventilgehäuses gehaltenen Ringplatte 33 abgedeckt ist. Im Innern des Magnetgehäuses 32 ist einem Spulenkörper 34 eine ringförmige Erregerspule 35 gehalten, die den Anker 31 und das diesem zugekehrte Ende des Ventilgehäuses 10 konzentrisch umgibt. Die Erregerspule 35 ist über zwei elektrische Anschlüsse 36,37 an eine Spannungsquelle anschließbar. In der in Fig. 1 gezeigten Grund- oder Ruhestellung des Magnetventils ist die Erregerspule 35 unbestromt und das Sitzventil durch die Rückstellfeder 27 geöffnet. Der Ventilstößel 21 steht mit seinem Stößelelement 22 etwas über die Stirnseite des Ventilgehäuses 10 vor und legt sich durch die Rückstellfeder 27 an den Anker 31 an, der dadurch wiederum gegen einen Anschlag in der Kapsel 29 angedrückt wird, wobei sich zwischen den Ankerflächen und dem Stirnende des Ventilgehäuses 10 der Hubabstand h einstellt. Der Ringbund 231 am Stößelelement 23 liegt unter der Wirkung der Druckbegrenzungsfeder 28 an einem von der Stirnseite der Stößelführungsbuchse 25 gebildeten Anschlag 38 im Stößelelement 22 an, wobei das Ventilglied 26 um einen gleichen oder geringfügig kleineren Hub vor dem Ventilsitz 14 am Ventilkörper 12 liegt.

Wird der Elektromagnet 30 bestromt, so wird durch die zwischen dem Ventilgehäuse 10 und dem Anker 31 wirksame Magnetkraft letzterer in Richtung Ventilgehäuse 10 bewegt, bis er nach dem Hub h an der ringförmigen Stirnseite des Ventilgehäuses 10 anschlägt. Dabei wird das von der Rückstellfeder 27 gegen den Anker 31 angelegte Stößelelement 22 ebenfalls um den Hub h in Richtung auf den Ventilkörper 12 bewegt, wodurch das durch die Druckbegrenzungsfeder 28 am Anschlag 38 gehaltene Stößelelement 23 mitgenommen wird und das Ventilglied 26 auf den Ventilsitz 14 am Ventilkörper 12 aufsetzt. Das Ventilglied 26 wird von der Druckbegrenzungsfeder 28 nunmehr in Schließstellung gehalten. Bleibt der Elektromagnet 10 bestromt, so ist der Öffnungsdruck des Sitzventils ausschließlich von der Auslegung der Druckbegrenzungsfeder 28 bestimmt. Übersteigt die vom Druck im Zuströmkanal 13 auf das ventilglied 26 erzeugte Verschiebekraft die auf den Ventilstößel 21 wirkende Federkraft der Druckbegrenzungsfeder 28, so wird das Ventilglied 26 vom Ventilsitz 14 abgehoben, und Druckmittel kann über das geöffnete Sitzventil zu den Abströmkanälen 18 fließen.

Das beschriebene Magnetventil ist konstruktiv einfach aufgebaut und kann einfach eingestellt und justiert werden. Es wird in sog. Vorwärtsmontage zusammergesetzt, wobei Montage und Einstellung sequentiell ablaufen. Im einzelnen erfolgt die Montage des Magnetventils wie folgt:
Der Ventilkörper 12 wird in Fig. 1 von unten her in das Ventilgehäuse 10 auf ein erstes, zu kleines Einstellmaß voreingepreßt, wobei die Preßbewegung von unten nach oben erfolgt. Der Ventilstößel 21 wird aus den Stößelelementen 22 und 23 mit dazwischen angeordneter Druckbegrenzungsfeder 28 und der Stößelführungsbuchse 25 als vormontierte und vorjustierte Baueinheit zusammengesetzt. Dabei wird die Vorspannung der Druckbegrenzungsfeder 28 durch mehr oder weniger tiefes Einschieben der Stößelführungsbuchse 25 vorgegeben. Ist die notwendige Vorspannung erreicht, so wird die Stößelführungsbuchse 25 axial unverschiebbar im Stößelelement 22 festgesetzt.

Die Öffnungs- oder Rückstellfeder 27 wird von oben her in die Längsbohrung 11 des Ventilgehäuses 10 eingeführt, ebenso der als Baueinheit vormontierte Ventilstößel 21. Dabei verschwindet der Ventilstößel 21 vollständig im Ventilgehäuse 10. Nunmehr wird der Ventilstößel 21 von oben her mit einem als Vorrichtungsstift ausgebildeten Montagewerkzeug nach unten gedrückt, bis das Ventilglied 26 auf dem Ventilsitz 14 des Ventilkörpers 12 aufliegt. Bei diesem Montageschritt wirkt das Montagewerkzeug ausschließlich auf das Stößelelement 22. Die Einschiebekraft des Montagewerkzeugs ist dabei so gewählt, daß die Rückstellfeder 27 überdrückt wird, aber das im Stößelelement 22 axial verschiebliche Stößelelement 23 nicht verschoben wird. Dies ist ohne weiteres möglich, da die Kraft der Rückstellfeder 27 im Ausführungsbeispiel 3 N und die Kraft der Druckbegrenzungsfeder 28 im Ausführungsbeispiel in der Größenordnung von 4,5 - 8 N bemessen ist. Nunmehr wird der Ventilkörper 12 über das erste Einstellmaß hinaus von unten nach oben weitergepreßt, was zur Folge hat, daß auch der Ventilstößel 21 gegen das abgefederte Montagewerkzeug nach oben wandert. Dies wird solange festgesetzt, bis der Ventilstößel 21 mit seiner oberen Stirnfläche um ein vorgegebenes Einstellmaß, beispielsweise 0,05 - 0,1 mm über die obere Stirnfläche des Ventilgehäuses 10 vorsteht. Dieses Vorstehmaß des Ventilstößels 21 bzw. des Stößelelements 22 über das Ventilgehäuse 10 entspricht dem vorgegebenen Ventilstößelhub h.

Zur Hubeinstellung wird die Kapsel 29, in die der Anker 31 eingesteckt ist, zum Ventilgehäuse 10 ausgerichtet und unter Zuhilfenahme einer Preßvorrichtung ein erstes Wegstück weit über das Ventilgehäuse 10 gepreßt. Mittels einer bestrombaren Hilfsspule wird der Anker 31 an das Ventilgehäuse 10 angelegt. Durch den Zuströmkanal 13 und den Ventilkörper 12 hindurch, wird ein Wegmeßtaster eingeführt und angehoben, bis er das Ventilgied 26 erreicht. Dies ist die Nullposition des Wegmeßtasters. Ist die Nullposition festgelegt, so wird die Bestromung der Hilfsspule beendet. Nach Beendigung der Bestromung hebt die Rückstellfeder 27 den Anker 31 an. Nun wird die Kapsel 29 um ein weiteres Wegstück in Fig. 1 nach unten weitergedrückt, bis der Wegmeßtaster einen Abstand zur Nullposition des Ventilglieds 26, also relativ zum Ventilsitz 14 meldet, der dem gewünschten Ventilhub entspricht. Dann werden Hilfsspule und Wegmeßtaster entfernt. Durch Verschweißen der Kapsel 29 mit dem Ventilgehäuse 10 wird deren Position fixiert. Danach wird das Magnetgehäuse 32 mit Ringspule 35 auf die Kapsel 29 axial aufgeschoben und an der am Ventilgehäuse 10 befestigten Ringplatte 33 durch Umbördelung festgelegt.

Das in Fig. 2 im Längsschnitt dargestellte Magnetventil stimmt mit dem zuvor beschriebenen Magnetventil gemäß Fig. 1 weitgehend überein und ist nur hinsichtlich des Ventilstößels 21 modifiziert. Soweit in den beiden Magnetventilen der Fig. 1 und 2 Bauteile übereinstimmen, sind sie daher mit gleichen Bezugszeichen versehen.

Der Ventilstößel 21 ist auch hier in zwei koaxiale und relativ zueinander axial verschiebliche Stößelelemente 22' und 23' unterteilt. Das Stößelelement 22' weist wiederum eine Stufenbohrung 24' mit zwei Bohrungsabschnitten 241' und 242' unterschiedlichen Bohrungsdurchmessers auf, wobei aber im Gegensatz zu Fig. 1 der durchmesserkleinere Bohrungsabschnitt 242' in dem dem Ventilkörper 12 zugekehrten vorderen Teil des Stößelelements 22' und der durchmessergrößere Bohrungsabschnitt 241' in dem dem Anker 31 zugekehrten hinteren Teil des Stößelelements 22' ausgebildet ist. Das Stößelelement 23' ist identisch ausgebildet wie in Fig. 1 und ist in dem Bohrungsabschnitt 242' mit dem kleineren Innendurchmesser axial verschieblich geführt. Sein am hinteren Ende ausgebildete Ringbund 231' liegt dagegen in dem durchmessergrößeren Bohrungsabschnitt 241' ein und wird von der dort ebenfalls angeordneten Druckbegrenzungsfeder 28 gegen die jetzt den Anschlag 38 bildende Ringschulter 243' am Übergang der beiden Bohrungsabschnitte 241' und 242' angedrückt. Die Druckbegrenzungsfeder 28 stützt sich wiederum an dem Ringbund 231' ab, wobei sie von dem über den Ringbund 231' vorstehenden Abschnitt 232' des Stößelelements 23' zentriert wird. Ihr Widerlager wird von einem Walzenkörper 39 gebildet, der in den Bohrungsabschnitt 241' mit dem größeren Bohrungsdurchmesser eingepreßt ist. Die Vorspannung der Druckbegrenzungsfeder 28 und damit ihre Schließkraft wird durch die Lage des Walzenkörpers 39 im Stößelelement 22 bestimmt.

Der übrige Aufbau und auch die Funktionsweise des Magnetventils gemäß Fig. 2 sowie dessen Zusammensetzung in Vorwärtsmontage ist identisch wie zu Fig. 1 beschrieben, so daß insoweit auf die vorstehenden Ausführungen verwiesen wird.

## Patentansprüche

1. Magnetventil mit Druckbegrenzung in einer mit Schlupfregelung ausgerüsteten Kraftfahrzeug-Bremsanlage, mit einem eine Ventilöffnung (40) umschließenden Ventilsitz (14) und einem mit diesem Zusammenwirkenden Ventilglied (26) zum Freigeben und Schließen der Ventilöffnung (40), das an einem axial verschiebbaren Ventilstößel (21;21') befestigt ist und von einer Rückstellfeder (27) in Ventiloffenstellung gehalten wird, mit einem auf den Ventilstößel (21;21') wirkenden Anker eines Elektromagneten (30) zum Überführen des Ventilglieds (26) in Ventilschließstellung und mit einer in der Ventilschließstellung wirksamen Druckbegrenzungsfeder (28) zur Vorgabe eines Ventilöffnungsdrucks, wobei ein zu begrenzander Druck durch die Ventilöffnung (40) dem Ventilsitz (14) zugeführt wird, dadurch gekennzeichnet, daß der Ventilstößel (21;21') in zwei zueinander koaxiale und relativ verschiebbare Stößelelemente (22,23;22',23') unterteilt ist, von denen das eine Stößelelement (23;23') das Ventilglied (26) trägt und das andere Stößelelement (22;22') vom Anker des Elektromagneten (30) antreibbar ist, und daß die Druckbegrenzungsfeder (28) zwischen den beiden Stößelelementen (22,23;22',23'), sich an diesen axial abstützend, angeordnet ist.

2. Ventil nach Anspruch 1, dadurch gekennzeichnet, daß der Ventilsitz (14) an einem in einem hülsenartigen Ventilgehäuse (10) eingepreßten Ventilkörper (12) ausgebildet ist, daß das vom Elektromagneten (30) antreibbare Stößelelement (22;22') zumindest teilweise hohlzylindrisch ausgebildet und in dem Ventilgehäuse (10) axial verschieblich geführt ist, daß das das Ventilglied (26) tragene Stößelelement (23;23') in dem hohlzylindrischen Stößelelement (22;22') axial verschieblich geführt ist, daß die Rückstellfeder (27) sich zwischen dem Ventilkörper (12) und dem hohlzylindrischen Stößelelement (22;22') abstützt und letzteres gegen den Anker (31) des Elektromagneten (30) anlegt und daß die zwischen den Stößelelementen (22,23;22',23') wirksame Druckbegrenzungsfeder (28) das das Ventilglied (26) tragende Stößelelement (23;23') gegen ein am hohlzylindrischen Stößelelement (22;22') vorhandenen Anschlag (38) anlegt.

3. Ventil nach Anspruch 2, dadurch gekennzeichnet, daß das das Ventilglied (26) tragende Stößelelement (23;23') einen radial überstehenden Ringbund (251;251') trägt und daß der Anschlag (38) am hohlzylindrischen Stößelelement (22;22') in den Verschiebeweg des Ringbunds (251;251') hineinragt.

4. Ventil nach Anspruch 3, dadurch gekennzeichnet, daß der Anschlag (38) am hohlzylindrischen Stößelelement (22') von der ringförmigen Stirnseite einer in dieses eingepreßten Stößelführungsbuchse (25) für das das Ventilglied (26) tragende Stößelelement (23) gebildet ist, die vorzugsweise mit einem aus dem hohlzylindrischen Stößelelement (22) herausragenden, radial überstehenden Ringbund (251) in dem Ventilgehäuse (10) axial verschieblich geführt ist.

5. Ventil nach Anspruch 3, dadurch gekennzeichnet, daß der Anschlag (38) am hohlzylindrischen Stößelelement (22') von einer Ringschulter (243') am Übergang zweier Hohlzylinderabschnitte (241',242') mit unterschiedlichen lichten Durchmessern im hydraulischen Stößelelement (22') gebildet ist und daß das das Ventilglied (26) tragende Stößelelement (23') in dem Hohlzylinderabschnitt (242') mit dem kleineren Innendurchmesser geführt ist und der Ringbund (231') des das Ventilglied (26) tragenden Stößelelements (23') sowie die Druckbegrenzungsfeder (28) in dem Hohlzylinderabschnitt (241') mit dem größeren Innendurchmesser angeordnet sind.

6. Ventil nach einem der Ansprüche 3 - 5, dadurch gekennzeichnet, daß die Druckbegrenzungsfeder (28) als Schraubendruckfeder ausgebildet ist, die sich am Ringbund (231;231') des das Ventilglied (26) tragenden Ventilstößel (23;23') und an einem Gegenlager (243;39') im hohlzylindrischen Stößelelements (22;22') abstützt.

7. Ventil nach Anspruch 5 und 6, dadurch gekennzeichnet, daß das Gegenlager für die Druckbegrenzungsfeder (28) von einem in dem Hohlzylinderabschnitt (241') mit dem größeren Innendurchmesser eingesetzten Walzenkörper (39) gebildet ist.

8. Ventil nach Anspruch 4 und 6, dadurch gekennzeichnet, daß das Gegenlager für die Druckbegrenzungsfeder (28) von einer Ringschulter (243) am Übergang zweier Hohlzylinderabschnitte (241,242) mit unterschiedlichen Innendurchmessern im hohlzylindrischen Stößelelement (22) gebildet ist und daß die Stößelführungsbuchse (25) mit einliegendem Stößelelement (23) und die Druckbegrenzungsfeder (28) in dem Hohlzylinderabschnitt (241) mit dem größeren lichten Durchmesser angeordnet sind.

## Claims

1. Solenoid valve with pressure limitation in a motor vehicle brake system equipped with slip control, having a valve seat (14), surrounding a valve opening (40), and a valve element (26), interacting with the said valve seat, for releasing and closing the valve opening (40), which valve element is fastened on an axially displaceable valve tappet (21; 21') and is held in the valve-open position by a restoring spring (27), having an armature, acting on the valve tappet (21; 21'), of an electromagnet (30) for transferring the valve element (26) into the valve-closed position and having a pressure-limiting spring (28), acting in the valve-closed position, for predetermining a valve-opening pressure, a pressure which is to be limited being fed through the valve opening (40) to the valve seat (14), characterized in that the valve tappet (21; 21') is subdivided into two tappet elements (22, 23; 22', 23') which are coaxial to each other and relatively displaceable, of which the one tappet element (23; 23') bears the valve element (26) and the other tappet element (22; 22') can be driven by the armature of the electromagnet (30), and in that the pressure-limiting spring (28) is arranged between the two tappet elements (22, 23; 22', 23'), supported axially against the latter.

2. Valve according to Claim 1, characterized in that the valve seat (14) is formed on a valve body (12) press-fitted in a sleeve-like valve housing (10), in that the tappet element (22; 22'), which can be driven by the electromagnet (30), is of an at least partially hollow-cylindrical design and is guided axially displaceably in the valve housing (10), in that the tappet element (23; 23') bearing the valve element (26) is guided axially displaceably in the hollow-cylindrical tappet element (22; 22'), in that the restoring spring (27) is supported between the valve body (12) and the hollow-cylindrical tappet element (22,; 22') and brings the latter to bear against the armature (31) of the electromagnet (30) and in that the pressure-limiting spring (28), acting between the tappet elements (22, 23; 22', 23'), brings the tappet element (23; 23') bearing the valve element (26) to bear against a stop (38) provided on the hollow-cylindrical tappet element (22; 22').

3. Valve according to Claim 2, characterized in that the tappet element (23; 23'), bearing the valve element (26), bears a radially projecting annular collar (251; 251') and in that the stop (38) on the hollow-cylindrical tappet element (22; 22') protrudes into the path of displacement of the annular collar (251; 251').

4. Valve according to Claim 3, characterized in that the stop (38) on the hollow-cylindrical tappet element (22') is formed by the annular end face of a tappet guide bush (25), press-fitted into the latter, for the tappet element (23) bearing the valve element (26), which bush is preferably guided axially displaceably in the valve housing (10) by a radially projecting annular collar (251), protruding out of the hollow-cylindrical tappet element (22).

5. Valve according to Claim 3, characterized in that the stop (38) on the hollow-cylindrical tappet element (22') is formed by an annular shoulder (243') at the transition of two hollow-cylindrical sections (241', 242') having different clear diameters in the hydraulic tappet element (22') and in that the tappet element (23') bearing the valve element (26) is guided in the hollow-cylindrical section (242') having the smaller inside diameter and the annular collar (231') of the tappet element (23'), bearing the valve element (26), and also the pressure-limiting spring (28) are arranged in the hollow-cylindrical section (241') having the larger inside diameter.

6. Valve according to one of Claims 3 - 5, characterized in that the pressure-limiting spring (28) is designed as a helical compression spring which is supported against the annular collar (231; 231') of the valve tappet (23; 23'), bearing the valve element (26), and against a counterbearing (243; 39') in the hollow-cylindrical tappet element (22; 22').

7. Valve according to Claims 5 and 6, characterized in that the counterbearing for the pressure-limiting spring (28) is formed by a roll body (39) inserted in the hollow-cylindrical section (241') having the larger inside diameter.

8. Valve according to Claims 4 and 6, characterized in that the counterbearing for the pressure-limiting spring (28) is formed by an annular shoulder (243) at the transition of two hollow-cylindrical sections (241, 242) with different inside diameters in the hollow-cylindrical tappet element (22) and in that the tappet guide bush (25), with tappet element (23) lying inside, and the pressure-limiting spring (28) are arranged in the hollow-cylindrical section (241) having the larger clear diameter.

## Revendications

1. Electrovanne avec limitation de pression dans une installation de freinage de véhicule à moteur équipée d'un système de régulation d'antipatinage, avec un siège de vanne (14) entourant une ouverture de vanne (40) et un organe de vanne (26), coopérant avec celui-ci pour ouvrir et fermer l'ouverture de vanne (40), organe qui est fixé à un poussoir pouvant coulisser axialement (21, 21') et est maintenu par un ressort de rappel (27) en position d'ouverture de la vanne, avec une armature d'un électroaimant (30) qui agit sur le poussoir (21 ; 21') de vanne pour faire passer l'organe de vanne (26) dans la position de fermeture de la vanne et avec un ressort de limitation de pression (28) opérationnel dans la position de fermeture de la vanne et servant à prédéfinir une pression d'ouverture de la vanne, une pression de limitation étant appliquée à travers l'ouverture de vanne (40) sur le siège de vanne (14), électrovanne caractérisée en ce que le poussoir de vanne (21 ; 21') est subdivisé en deux éléments de poussoir (22, 23 ; 22', 23') coaxiaux et qui peuvent coulisser l'un par rapport à l'autre, l'un de ces éléments de poussoir (23 ; 23') portant l'organe de vanne (26) et l'autre élément de poussoir (22 ; 22') pouvant être entraîné par l'armature de l'électro-aimant (30), et en ce que le ressort de limitation de pression (28) est disposé entre les deux éléments de poussoir (22, 22' ; 23, 23') en s'appuyant axialement sur ceux-ci.

2. Electrovanne selon la revendication 1, caractérisée en ce que le siège de vanne (14) est constitué sur un corps de vanne (12) enfoncé à la presse dan s un boîtier de vanne (10) en forme de manchon, en ce que l'élément de poussoir (22 ; 22') qui peut être entraîné par l'électroaimant (30) est constitué au moins en partie sous la forme d'un cylindre creux et est guidé dans le boîtier de vanne (10) de façon à coulisser axialement, en ce que l'élément de poussoir (23 ; 23') qui porte l'organe de vanne (26) est guidé de façon à coulisser axialement dans l'élément de poussoir cylindrique creux (22 ; 22'), en ce que le ressort de rappel (27) s'appuie entre le corps de vanne (12) et l'élément de poussoir cylindrique creux (22 ; 22') et cet élément repose contre l'armature (31) de l'électroaimant (30), et en ce que le ressort de limitation de pression (28) opérationnel entre les éléments de poussoir (22, 22' ; 23, 23') applique l'élément de poussoir (23 ; 23') qui porte l'organe de vanne (26) contre une butée (38) qui existe sur l'élément de poussoir cylindrique creux (22 ; 22').

3. Electrovanne selon la revendication 2, caractérisée en ce que l'élément de poussoir (23 ; 23'), qui porte l'organe de vanne (26), porte un collet annulaire (251 ; 251') qui est radialement en surplomb et en ce que la butée (38) sur l'élément de poussoir (22 ; 22') cylindrique creux fait saillie sur le trajet de coulissement du collet annulaire (251 ; 251').

4. Electrovanne selon la revendication 3, caractérisée en ce que la butée (38) est formée sur l'élément de poussoir cylindrique creux (22') par la face frontale de forme annulaire d'une douille de guidage de poussoir (25) enfoncée à la presse dans cet élément, pour l'élément de poussoir (23) qui porte l'organe de vanne (26), élément de poussoir (23) qui de préférence est guidé de façon à coulisser axialement à partir du collet annulaire (251) qui fait saillie hors de l'élément de poussoir cylindrique creux (22) dans le boîtier de vanne (10).

5. Electrovanne selon la revendication 3, caractérisée en ce que la butée (38) sur l'élément de poussoir cylindrique creux (22') est formée dans l'élément de poussoir hydraulique (22') par un épaulement annulaire (243') sur le passage de deux sections cylindriques creuses (241', 242') ayant des diamètres d'ouverture différents et en ce que l'élément de poussoir (23') qui porte l'organe de vanne (26) est guidé dans la section cylindrique creuse (242') qui a le plus petit diamètre et en ce que le collet annulaire (231') de l'élément de poussoir (23') qui porte l'organe de vanne (26) ainsi que le ressort de limitation de pression (28) sont disposés dans la section cylindrique creuse (241') qui a le plus grand diamètre.

6. Soupape selon l'une des revendications 3 à 5, caractérisée en ce que le ressort de limitation de pression (28) est constitué sous la forme d'un ressort de compression à boudin qui s'appuie sur le collet annulaire (231, 231') du poussoir de vanne (23 ; 23') qui porte l'organe de vanne (26) et sur un contre-appui (243 ; 39') dans l'élément de poussoir cylindrique creux (22, ; 22').

7. Electrovanne selon les revendications 5 et 6, caractérisée en ce que le contre-appui pour le ressort de limitation de pression (28) est formé par un corps de rouleau (39) inséré dans la section cylindrique creuse (241') qui a le plus grand diamètre de passage.

8. Electrovanne selon les revendications 4 et 6, caractérisée en ce que le contre-appui pour le ressort de limitation de pression (28) est formé par un épaulement annulaire (243) sur le passage des deux sections cylindriques creuses (241, 242) qui ont des diamètres intérieurs de passage différents dans l'élément de poussoir cylindrique creux (22), et en ce que la douille de guidage de poussoir (25) avec l'élément de poussoir qui se trouve dedans (23) et le ressort de limitation de pression (28), sont disposés dans la section cylindrique creuse (241) qui a le plus grand diamètre de passage.
